# EUROPEAN PATENT SPECIFICATION

(11) **EP 0 633 090 B1**
(45) Date of publication and mention of the grant of the patent: **28.01.1998**
(21) Application number: 94304764.7
(22) Date of filing: 29.06.1994
(51) Int. Cl.: B23K 9/067, B23K 9/028

(54) **Welding process**
Schweissverfahren
Méthode de soudage

(30) Priority: 05.07.1993 JP 165365/93
(43) Date of publication of application: 11.01.1995
(73) Proprietor: Kiyohara, Masako, Kumamoto-shi Kumamoto-ken (JP)
(72) Inventor: Ikeda, Nobukazu, Nishi-ku, Osaka (JP); Morimoto, Akihiro, Nishi-ku, Osaka (JP); Morokoshi, Hiroshi, Nishi-ku, Osaka (JP)
(74) Representative: Evans, David Charles

(56) References cited:
- EP-A- 0 433 179
- EP-A- 0 585 068
- DE-A- 3 932 210
- US-A- 3 089 944
- US-A- 4 950 864

## Description

The present invention relates to a welding process, particularly for super high purity gas feeding system piping common in semiconductor manufacturing plants and the like.

In plants in which super high purity gas is used, such for example as semiconductor manufacturing plants, the gas feeding system piping is typically constructed from stainless steel (SUS 316L) electro polished pipes. Non-welded union joints are commonly used to connect individual pipes to each other.

However, nonwelded joints have inherent problems in that they are susceptible of gas leakages, thereby reducing the amount of system gas available for re-use, and they lead to increased piping costs, when compared with other joining methods. As a consequence, connection by welding has been adopted, and special processes have been developed such for example as automatic TIG butt-welding or automatic processes using special joints e.g. welding collars.

Achieving sufficient weld strength is important in these processes, especially when welding stainless steel or other weld sensitive materials, but in addition to this, there are following important requirements:
(a) the weld should not cause contamination to pipelines, by acting as a source of contaminant particles, and
(b) the surface of the weld should be smooth and flat with the minimum irregularities thereby promoting the formation of a corrosion resistant passive film.

As a step towards meeting the above requirements, the present inventor developed a technique to reduce the effects of particles at the welds by feeding a back shielding gas, such for example as argon, through pipes during welding and optimizing the internal pipe pressure of the gas so that ingress of particles into the pipe during welding is reduced; this technique is disclosed in Japanese Patent Application No. 3-216158.

The above-mentioned technique is characterised by feeding back shielding gas inward from one end of the stainless steel piping, and adjusting the flow rate of said back shielding gas such that the internal pressure of both stainless steel pipes to be welded is increased to a specified pressure, then arc welding the engaging grooves of the pipes in the presence of an arc gas. When welding by a conventional process in which no back shielding gas is used, several thousand particles typically enter the pipe during welding; the aforementioned technique however may produce excellent results in that the number of particles entering the pipe of greater than 0.1µm may be reduced to less than scores of particles.

But, in the above described welding process, it is necessary to keep the internal pipe pressure above a minimum figure whilst maintaining a suitable gas flow rate; if it is not possible to do this, the number of particles entering the pipe will significantly increase.

Consequently, if, for example, welding is carried out near semiconductor manufacturing equipment, and the pressure inside the pipe is restricted, or it is not possible to feed a large enough volume of back shielding gas to maintain the pressure, it is difficult to decrease sufficiently the number of particles entering the pipe.

US-A-4950864 discloses a system for starting a welding arc that uses a high DC voltage to start an arc, and intermediate DC voltage to sustain the arc, while the high voltage is disconnected, and a low DC voltage welding power supply.

US-A-3089944 discloses a method of arc welding which comprises supplying a radioactive gas between the electrodes in sufficient quantity to produce arc starting ionization of a stable gaseous medium in the gap.

The object of the present invention is to provide an improved arc welding process which reduces the adverse effects of particles generated during the welding process on the properties of the resulting weld.

According to one aspect of the present invention therefore there is provided a method of arc welding a section of metallic piping, characterised in that a back shielding gas is caused or allowed to flow in the piping during welding, and by holding the arc current at a reduced level at the start of the welding operation thereby to avoid substantial welding of the work until at least a major proportion of the particles displaced by the plasma flow at the generation of the arc have dissipated, and thereafter increasing said arc current to the regular level for welding; thereby to reduce contamination of the work by the particles.

The method may involve reducing the initial arc current at the beginning of the process, so that when the arc is generated, the plasma flow shock is reduced, thereby allowing particles displaced or blown-up by the plasma initiation event to dissipate before they can contaminate the welding area. The welding area may become vulnerable once the arc current is increased to the regular level for welding, and melting of the work commences.

The present invention therefore seeks to solve the problems associated with the prior art technique as hereinbefore described for example when there is a restriction on the internal pressure of back shielding gas, or it is not possible to feed a large enough volume of back shielding gas, by providing a welding process which may reduce significantly the number of particles entering the pipe.

As a result of carrying out a number of particle generating tests during various prior art arc weldings the inventor has discovered that:
(i) In the case of butt welding of pipes, a large volume of particles enter the pipes through the butt sections within 1 to 2 seconds after the arcing occurs (typically, in the order of several thousand particles larger than 1µm enter).
(ii) Even when the pipe butt sections and the welding head inside the welder are kept scrupulously clean, and particles in arc gas and back shielding gas are nearly completely removed, several hundred particles enter the piping.

The inventor has found that this is, at least in part, caused by:
(a) A large number of particles being displaced and blown up into the welding head by the plasma flow associated with the generation of arcing.
(b) Solidification shrinkage of the surface of molten metal generated at the start of arcing causes stress to act on the welded section of the groove, which results in the generation of clearance on the opposite side of the pipe as the joint is distorted.

With this knowledge, the number of particles entering the pipe may, in accordance with the present invention, be reduced by:
(i) Reducing the plasma flow generated at the start of the arc, and
(ii) preventing melting of the butt section at the start of arcing, thereby delaying generation of clearance at the butt section of the tube until after the start of arc when a large number of particles are blown up.

In another aspect of the present invention, there is provided a method of welding which includes discharging a back-shielding gas inward from the opening of the head end side of one stainless steel pipe in welding two stainless steel pipes by arc welding, keeping the welding current of the start of arc at the figure lower than the regular welding current for a specified time from the start of arc, and then raising the welding current to the regular welding current.

Since the current at the start of arcing is below the regular welding current, the force of plasma flow generated the moment arc is emitted may be weakened, thereby softening the shock. The number of particles blown up in the welding head may therefore be reduced.

Furthermore, as the current at the start of arc is below the regular welding current, no significant melting of the work occurs. As a result, at the start of arc, when particles are blown up in the welding head, there may be substantially no clearance generated at the butt section, thereby inhibiting the entry of particles into the pipe.

Following is a description by way of example only and with reference to the accompanying drawings of methods of carrying the present invention into effect.

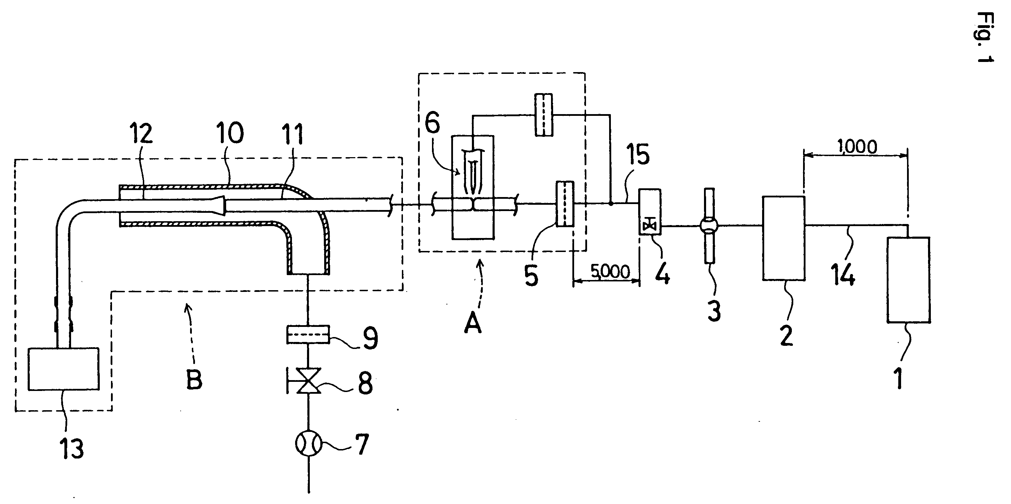

In the drawings:-
Figure 1 is a schematic diagram of plant for a welding process according to the present invention.
Figure 2 is an enlarged view of Section A shown in Figure 1.
Figure 3 is an enlarged view of Section B shown in Figure 1.

In the figures, numeral 1 shows a liquified argon container, 2 an aluminium evaporator, 3 a pressure regulating manifold, 4 a flow meter, 5 a metal filter, 6 an automatic TIG welder, 7 a pressure regulator means, 8 a throttle means, 9 a filter, 10 stainless steel external pipe (19.05 mm φ), 11 a stainless steel gas lead-through pipe (6.35 mm φ), 12 stainless steel gas lead-through pipe (9.52 mm φ), 13 a laser particle counter, 14 a stainless steel flexible tube (9.52 mm φ), 15 a stainless steel tube (6.35 mm φ).

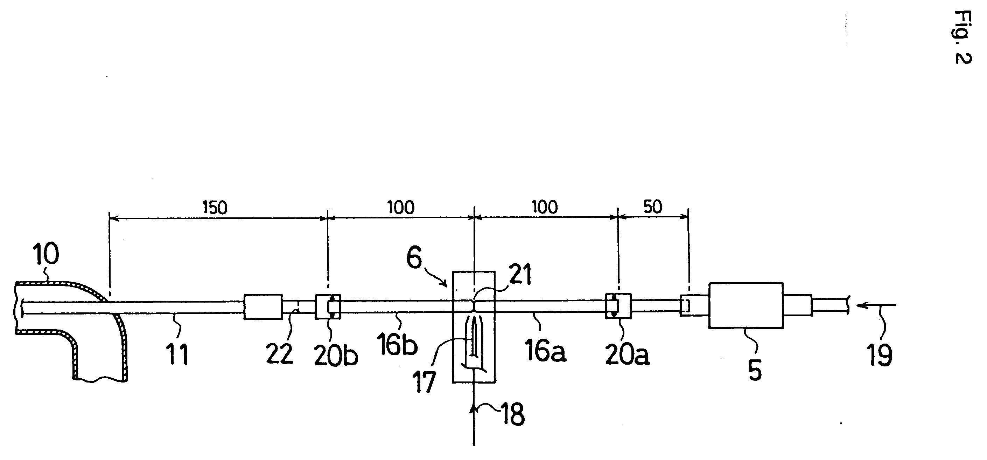

In Figure 2, 16a 16b are stainless steep pipes (SUS316L; outside diameter: 6.35 mm φ; wall thickness: 1 mm) whose inner wall surfaces are polished (by electrolysis or another process), 17 a tungsten electrode (1.0 mm φ; point angle α = 15°; distance between electrode and groove = 0.8 mm), 18 arc gas (argon; flow rate: 8 L/min), 19 back shielding gas (argon pressure flow rate 6 L/min), 20a, 20b O-ring seal joints, and 21 a circumferential groove.

The above-mentioned automatic TIG welder 6 is an Arc Machine Company 107-4A. The automatic welder has an electrode 17 which is rotated around pipelines 16a, 16b at a rotating speed of 7.9 sec/rotation, and requiring 2.5 turns to complete a weld at the groove 21. The Arc Machine automatic welder enables the welding current I to be varied between 4 levels.

The Arc gas 18 which is supplied to the TIG welder 6 and the back shielding gas 19 is cleaned by a filter (not illustrated) attached to the TIG welder 6 and the metal filter 5 respectively. The number of particles in both gases 18, 19 is reduced to nearly zero. The groove 21 is formed by lightly chamfering circumferential edge of the end faces of pipes 16a and 16b.

The means 22 to regulate the flow of back shielding gas is, as shown in Figure 2, installed in the vicinity of the junction between gas lead-through pipe 11 and stainless steel pipe 16b. In the present embodiment an orifice made of electropolished stainless steel sheet is used to regulate the flow. It is also possible to use valves, and the like to achieve the same ends.

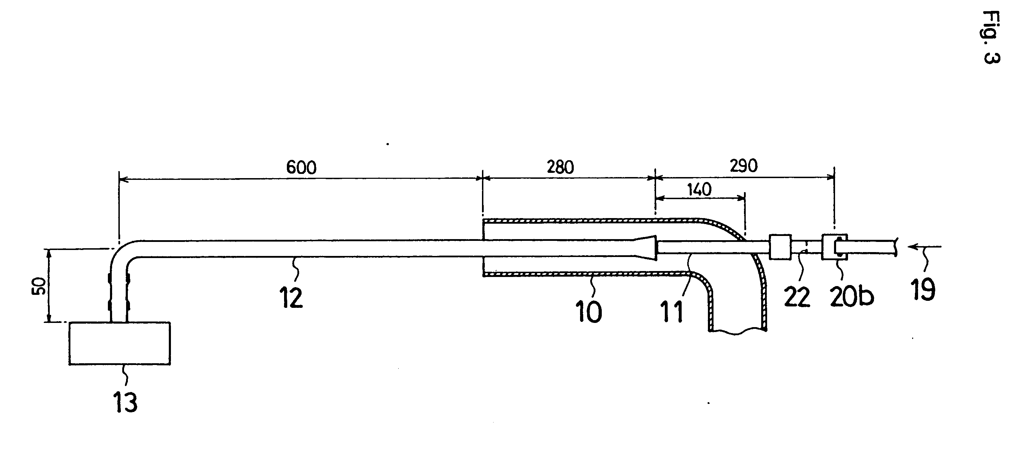

The laser pulse counter 13 is a counter with a suction flow rate of 28.3 L/min (Hitachi Denshi Ltd., TS-3700). In the present embodiment, as shown in Figures 2 and 3, nitrogen gas is caused to flow at a rate of 50 L/min into the external pipe 10 through the pressure regular 7, the throttle 8 and filter 9, such that the laser pulse counter 13 can imbibe gas at the necessary flow rate (28.3 L/min) through the gas lead-through pipe 12.

Now the welding of stainless steel pipes 16a, 16b will be described. First of all, stainless steel pipes 16a, 16b are cut with a cutter and the end faces are machined in 40-L/min N₂ purge atmosphere followed by purging the inside of stainless steel pipes 16a, 16b with N₂ at 7-9.5 kg/cm² for 2 seconds.

Next, stainless steel pipes 16a, 16b are juxtaposed the head of the automatic TIG welder 6, and arc distance is adjusted and the end grooves are aligned. The back shielding gas 19 is continuously pumped at a pressure of 5 mmH₂O and a flow rate of 5 L/min after the stainless steel pipes 16a, 16b are put into position. In order to minimize leakage of back shielding gas 19, it is essential to accurately match the grooves by aligning the shaft centres of both pipes. The groove may be formed by a standard end facing machine or by a lathe. As described later, there is no significant difference in the number of particles generated to the different groove forming methods.

Next, arc gas 18 is sucked into the automatic welder 6, and is free-purged at a flow rate of 8 L/min for 20 seconds before the start of the welding process (when the power source is turned on), and then the arc is turned on.

Rotation of the electrode starts 3 seconds after the start of arcing, and after the electrode has made about 2.5 turns at the speed of 7.7 sec/rotation, the arcing stops and post-welding purging of arc gas 18 continues for 20 seconds (flow rate 8 L/min).

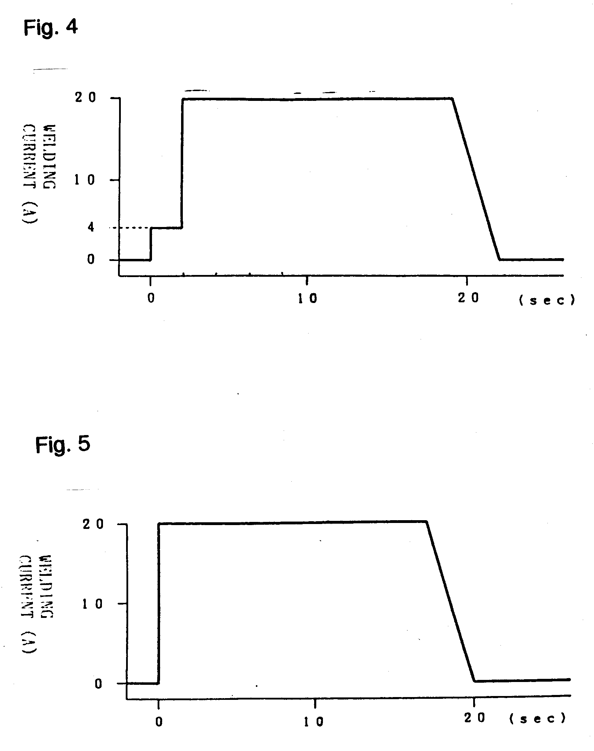

Figure 4 shows the variations with time of the welding current I of the automatic welder. The welding current I at the start of arcing (t =0) is held to about 1/5 (I = 4A) of the regular welding current (I = 20A) and held for about 2 seconds. Thereafter, it is raised to the regular welding current (I = 20A) and after about 17 seconds, it is lowered to zero over 3 seconds.

Ideally the welding current at the start of arc is about 10 - 30% of the regular welding current. When the current exceeds 30%, melting immediately begins thereby causing a clearance to develop in the groove. When it drops below 10%, the arc itself is likely to be unstable. It is optimum to take 1 to 3 seconds for returning from the low current at the start of arc to the regular current. If it takes longer, the welded parts are finished with slightly poor results.

During the welding, stainless steel pipes 16a, 16b, back shielding gas 19 is continuously fed preferably at a flow rate of 5 L/min. It is desirable to keep the flow rate of the above mentioned back shielding gas between 3-7 L/min. In addition, if the internal pressure of the pipe can be raised, it is desirable to hold the internal pressure at the above mentioned welded parts at about 3 - 100 mmH₂O by inserting an orifice or the like on the downstream side.

Measurement by the laser particle counter 13 of particles coming from the welded parts is begun 5 minutes before welding starts (with arc gas 18 sucked into the automatic TIG welder 6 and back shielding gas continuously supplied) and is continued until 5 minutes after the end of welding. From the output of the counter, it is possible to calculate the number of particles emitted during the welding process.

Welding is carried out in a clean room at 0.1 µm reference class (i.e. the number of particles exceeding 0.1 µm is one or less per 1 ft³).

The laser particle counter 13 is provided with seven measuring channels (Ch). Ch1 measures the number of particles from 0.1 to 0.2 µm, CH2 those from 0.2 to 0.3 µm, Ch3 those from 0.3 to 0.5 µm, Ch4 those from 0.5 to 1.0 µmm Ch5 those from 1.0 to 2.0 µm, and Ch6 those exceeding 2.0 µm and Ch7 the total number of particles.

### Test Conditions

Four text runs were carried out according to the following parameters.

The back shielding gas flow rate was set to 5 L/min and the pressure to 5 mmH₂O.

The detected number of particles exceeding 0.1 µm was 36 pieces (first test), 3 pieces (second test), 11 pieces (third test) and 88 pieces (fourth test).

For comparison, three further tests were carried out at a welding current I = 20A. Rotation of electrode was begun 2 seconds after the start of arc. Test conditions other than the welding current were the same as those of the previous tests.

In this case, the number of particles whose particle size was larger than 0.1 µm was 286 pieces (first test), 638 pieces (second test) and 228 pieces (third test), respectively.

It is clear from the above two sets of tests, the welding process of the present invention can greatly reduce the number of particles generated during the welding.

Furthermore, the welding process of the present invention can produce smoother inner and outer weld surfaces than those produced by conventional welding processes.

In the above-mentioned embodiment, only the case of butt-welding of stainless steel pipes is described, but it has been confirmed that the number of particles generated can be greatly reduced when the welding process according to the present invention is applied to other groove shapes, for example, when joints with lips are used, or tube type joints are used.

Also, welding of stainless steel pipes is described above, but it has been confirmed that the number of particles entering pipes can be greatly reduced with pipes other than stainless steel. One example being titanium alloys.

## Claims

1. A method of arc welding a section of metallic piping, characterised in that a back shielding gas is caused or allowed to flow in the piping during welding, and by holding the arc current at a reduced level at the start of the welding operation thereby to avoid substantial welding of the work until at least a major proportion of the particles displaced by the plasma flow at the generation of the arc have dissipated, and thereafter increasing said arc current to the regular level for welding; thereby to reduce contamination of the work by the particles.

2. A method according to claim 1 wherein the reduced level is 20-30% of the regular level.

3. A method according to claims 1 or 2 wherein said reduced level is applied for 1-3 seconds at the start of the welding operation.

4. A method according to any preceding claim the internal pressure and flow rate of the back shielding gas in the piping is controlled by upstream pumping means and downstream throttle means.

5. A method according to any preceding claim wherein the back shielding gas is maintained at a pressure of 3 to 120 mmH₂O during the welding process.

6. A method according to any preceding claim wherein the back shielding gas is argon.

7. A method according to any preceding claim wherein the arc welding process is an automatic TIG process and the arc gas is argon.

8. A method according to any preceding claim wherein the work is stainless steel piping.

9. A method according to any of claims 1-7 wherein the work is titanium alloy piping.

10. A method as claimed in any preceding claim wherein the reduced level of said arc current is such as to avoid significant surface shrinkage of the work at the start of welding until the said particles have substantially all dissipated.

## Patentansprüche

1. Verfahren zum Lichtbogenschweißen eines Abschnitts einer metallischen Verrohrung, **dadurch gekennzeichnet, daß** ein Schutzgas während des Schweißvorganges durch die Verrohrung geleitet wird, daß beim Beginn des Schweißvorganges der den Lichtbogen erzeugende Strom auf einer reduzierten Höhe gehalten wird, um ein Schweißen des Werkstückes in nennenwertem Ausmaß zu vermeiden, bis zumindest ein größerer Anteil der Partikel zerstreut ist, die durch den Plasmafluß bei der Erzeugung des Lichtbogens verdrängt worden sind, und daß danach der den Lichtbogen erzeugende Strom auf normale Höhe verstärkt wird, die für das Schweißen benötigt wird, um auf diesem Wege eine Kontaminierung des Werkstückes durch die genannten Partikel zu verringern.

2. Verfahren nach Aspruch 1 bei dem die Reduktion des Stromes auf 20 bis 30% der Normalhöhe erfolgt.

3. Verfahren nach Anspruch 1 oder 2, bei dem die Reduktion der Stromhöhe am Beginn des Schweißvorganges für 1 bis 3 Sekunden erfolgt.

4. Verfahren nach einem beliebigen der vorausgehenden Ansprüche, wobei der Innendruck und die Strömungsrate des Schutzgases in der Verrohrung durch stromabwärtige Drosselmittel geregelt werden.

5. Verfahren nach einem beliebigen der vorausgehenden Ansprüche, bei dem das Schutzgas während des Schweißvorgangs auf einem Druck von 3 bis 120 mm H₂O gehalten wird.

6. Verfahren nach einem beliebigen der vorausgehenden Ansprüche, bei dem das Schutzgas Argon ist.

7. Verfahren nach einem beliebigen der vorausgehenden Ansprüche, bei dem das Schweißverfahren ein automatisches TIG-Verfahren ist und das Lichtbogengas Argon ist.

8. Verfahren nach einem beliebigen der vorausgehenden Ansprüche, bei dem das Werkstück eine Verrohrung aus rostfreiem Stahl ist.

9. Verfahren nach einem beliebigen der Ansprüche 1 bis 7, bei dem das Werkstück eine Verrohrung aus einer Titanlegierung ist.

10. Verfahren nach einem beliebigen der vorausgehenden Ansprüche, bei dem die reduzierte Stromhöhe des Lichtbogenstromes derart bestimmt ist, daß eine Oberflächenschrumpfung des Werkstückes am Beginn des Schweißvorganges in signifikantem Umfang vermieden ist, bis die genannten Partikel zerstreut sind.

## Revendications

1. Un procédé de soudage à l'arc d'une section d'une canalisation métallique caractérisé en ce qu'un gaz de protection arrière est amené ou permis à s'écouler dans la canalisation pendant le soudage et en maintenant le courant d'arc à un niveau réduit au début de l'opération de soudage de façon à éviter un soudage substantiel de la pièce jusqu'à ce qu'au moins une proportion majeure des particules déplacées par l'écoulement de plasma lors de la génération de l'arc se soit dissipée et en augmentant ensuite ledit courant d'arc au niveau régulier pour le soudage afin de réduire la contamination de la pièce par les particules.

2. Un procédé selon la revendication 1, dans lequel le niveau réduit est 20 à 30% du niveau régulier.

3. Un procédé selon les revendications 1 ou 2, dans lequel ledit niveau réduit est appliqué pendant 1-3 secondes au début de l'opération de soudage.

4. Un procédé selon l'une quelconque des revendications précédentes, dans lequel la pression interne et le débit d'écoulement du gaz de protection arrière dans la canalisation sont commandés par un moyen de pompage amont et un moyen d'obturation aval.

5. Un procédé selon l'une quelconque des revendications précédentes dans lequel le gaz de protection arrière est maintenu à une pression de 3 à 120 mmH₂O pendant le procédé de soudage.

6. Un procédé selon l'une quelconque des revendications précédentes dans lequel le gaz de protection arrière est l'argon.

7. Un procédé selon l'une quelconque des revendications précédentes dans lequel le procédé de soudage à l'arc est un procédé TIG automatique et le gaz de l'arc est l'argon.

8. Un procédé selon l'une quelconque des revendications précédentes, dans lequel la pièce est une canalisation en acier inoxydable.

9. Un procédé selon l'une quelconque des revendications 1 à 7, dans lequel la pièce est une canalisation en alliage de titane.

10. Un procédé selon l'une quelconque des revendications précédentes dans lequel le niveau réduit dudit courant d'arc est tel de façon à éviter une contraction de surface significative de la pièce au début du soudage jusqu'à ce que lesdites particules aient été essentiellement toutes dissipées.
